(19) Europäisches Patentamt
European Patent Office
Office européen des brevets

(11) EP 2 169 019 A1

(12) **EUROPEAN PATENT APPLICATION**
published in accordance with Art. 153(4) EPC

(43) Date of publication:
**31.03.2010 Bulletin 2010/13**

(21) Application number: **08777289.3**

(22) Date of filing: **11.06.2008**

(51) Int Cl.:
***C09D 11/00*** *(2006.01)* ***B41J 2/01*** *(2006.01)*
***B41M 5/00*** *(2006.01)*

(86) International application number:
**PCT/JP2008/061065**

(87) International publication number:
**WO 2009/001717 (31.12.2008 Gazette 2009/01)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **22.06.2007 JP 2007164534**

(71) Applicant: **The Inctec Inc.**
**Yokohama-shi, Kanagawa 226-0022 (JP)**

(72) Inventors:
- **SUGITA, Yukio**
**Yokohama-shi**
**Kanagawa 226-0022 (JP)**
- **TAMURA, Mitsuyoshi**
**Yokohama-shi**
**Kanagawa 226-0022 (JP)**
- **YAMADA, Mitsuteru**
**Yokohama-shi**
**Kanagawa 226-0022 (JP)**
- **YAMAZAKI, Fumie**
**Yokohama-shi**
**Kanagawa 226-0022 (JP)**

(74) Representative: **HOFFMANN EITLE**
**Patent- und Rechtsanwälte**
**Arabellastrasse 4**
**81925 München (DE)**

(54) **OIL-BASED INK COMPOSITION FOR INKJET RECORDING**

(57) The inventive oil base ink composition for ink jet recording has a binder resin, a dispersant and at least C.I. Pigment Yellow 213 as an organic pigment contained in an organic solvent comprising a specific polyalkylene glycol dialkyl ether and a specific cyclic ester, and having a boiling point of 150°C to 280°C. This ink composition is highly safe for the human body, ensures that print quality is maintained over extended periods of time, and is improved in weather resistance.

EP 2 169 019 A1

**Description**

ART FIELD

The present invention relates to an oil base ink composition for ink jet recording.

BACKGROUND ART

In the ink jet recording mode available so far in the art, ink droplets are jetted in response to electric signals from a computer from a printer head or a spray nozzle toward the material to be recorded at high speeds thereby making prints on the ink reception layer of that material. This ink jet recording mode is quiet and enables high speed printing, so it has gained popularity in the form of copies, facsimiles, posters, displays or the like.

Inks used in the ink jet recording mode are now required to be subjected to little change over time, be capable of maintaining good enough concentration upon imaging, and have reproducibility of images printed on the material to be recorded. For this reason, the used ink is required to prevent filters from getting clogged up during an ink passage from an ink cartridge to a head. To this end, the ink must have regulated ink properties such as density, viscosity, particle diameter and concentration. That ink is prepared by blending a coloring agent that is generally a dye or pigment with a dispersant for dispersing them in a solvent and, if required, additives.

In general, yellow ink is often apt to be poorer in weather resistance and discolor a lot more. For this reason, printed matters posted outdoors have a problem with maintaining print quality over extended periods of time. For oil base inks, there are methods proposed in which they are allowed to contain water insoluble polymer fine particles or use fine particles comprising a dye coated with resin (JP(A) s 2001-302708, 2002-97396, 2003-96358, 2003-292860 and 2006-160785). With oil base inks, however, it is difficult to rely upon such methods, because instead of water, an organic solvent is used as a solvent.

With the oil base ink for ink jet recording, the weather resistance of printed matters is very greatly governed by the nature of pigments in the ink. When an inorganic yellow pigment is used to solve this problem, it is difficult to offer a sensible tradeoff between ink jet capability and ink storage, because the specific gravity of the pigment is very large. Low-boiling solvents commonly used as organic solvents for ink compositions generally include aromatic hydrocarbons such as toluenes and xylenes, aliphatic hydrocarbons such as hexane and kerosene, ketones such as methyl ethyl ketone, esters such as ethyl acetate, and propylene glycol monomethyl ether acetate. Using an ink comprising these organic solvents for printing on a polyvinyl chloride substrate used as a recording medium is not preferable in view of workers safety because they have a low boiling or flash point and smell strongly, and there is a nozzle clogging problem due to too fast drying. There is another problem with the cost of printer specifications for the reasons of their solubility and swelling capability with respect to a plastic material (for instance, polystyrene or ABS resin) used for ink storages and equipment such as printers and parts. Yet another problem is that upon printing on the polyvinyl chloride substrate, print quality and the dryness of prints are still less than satisfactory.

To solve such problems, there has recently been an oil base ink for ink jet recording proposed in which a metal complex compound is used as the organic solvent (WO 2004/007626), and an ink that can offer a sensible tradeoff between ink storage and print weather resistance has been used. However, metal complex yellow pigments such as C.I. Pigment Yellow 150 arise concerns about the safety of the human body because of containing heavy metals such as chromium and nickel.

An object of the present invention is to provide an oil base ink composition for ink jet recording which has a low vapor pressure, smells less strongly, is highly safe for the human body, makes sure of good working environments, maintains print quality over extended periods of time without recourse to using an inorganic yellow pigment or a metal complex yellow pigment as the yellow pigment, and provides prints improved in terms of weather resistance.

DISCLOSURE OF THE INVENTION

The present invention provides an oil base ink composition for ink jet recording, **characterized in that** a binder resin, a dispersant and at least C.I. Pigment Yellow 213 as an organic pigment are contained in an organic solvent comprising a polyalkylene glycol dialkyl ether represented by the following general formula (1) and a cyclic ester represented by the following general formula (2):

$$R^1\text{- }(OC_2H_4)_n\text{-}OR^2 \qquad \text{General Formula (1)}$$

where $R^1$ and $R^2$ are each an alkyl group having 1 to 3 carbon atoms and may be identical or different, and n is an integer of 2, 3 and 4; and

General Formula (2)

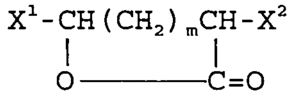

where $X^1$ and $X^2$ are each independently a hydrogen atom, and an alkyl or alkenyl group having 1 to 5 carbon atoms , and m is an integer of 1, 2 and 3.

The inventive oil base ink composition is further **characterized in that** the organic solvent has a boiling point of 150 to 280°C under atmospheric pressure.

The inventive oil base ink composition is further characterized by containing as the organic pigment C.I. Pigment Yellow 213 plus an organic pigment selected from the group consisting of a condensed azo pigment, a benzimidazolone pigment, an isoindolinone pigment and a condensed polycyclic pigment, with a content of that organic pigment being 0.01 to 40% by mass with respect to the C.I. Pigment Yellow 213.

The inventive oil base ink composition is further **characterized in that** a content of the organic pigment is 0.5% by mass to 20% by mass in the oil base ink composition for ink jet recording.

The inventive oil base ink composition is further **characterized in that** the binder resin is at least one of an acrylic resin, a vinyl chloride/vinyl acetate copolymer resin, a polyester resin and a cellulose resin.

The inventive oil base ink composition is further characterized by having a viscosity of 3 mPa·s to 15 mPa·s at 20°C.

The inventive oil base ink composition is further characterized by having a flash point of 60°C or higher.

The inventive oil base ink composition for ink jet recording is highly safe for the human body, maintains print quality over extended periods of time, and is improved in weather resistance.

## BEST MODE FOR CARRYING OUT THE INVENTION

The inventive oil base ink composition for ink jet recording is characterized by containing in it at least C.I. Pigment Yellow 213 as an organic pigment.

C.I. Pigment Yellow 213 is free of heavy metals such as chromium and nickel in its structure, as described in Japan Chemical Substance Dictionary (Nikkaji) Web No. J1,817,318B: the Independent Administrative Agency Japan Science and Technology Corporation Nikkaji Web as having the following structural formula:

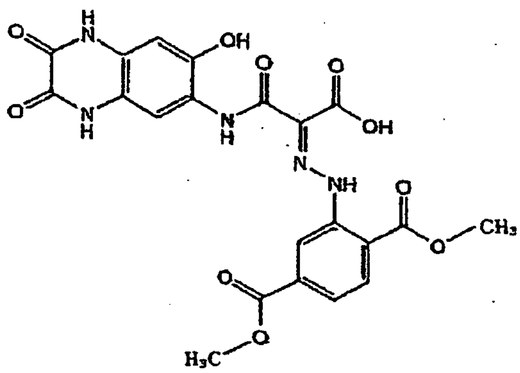

and in WO2006/119847 as having the following structural formula:

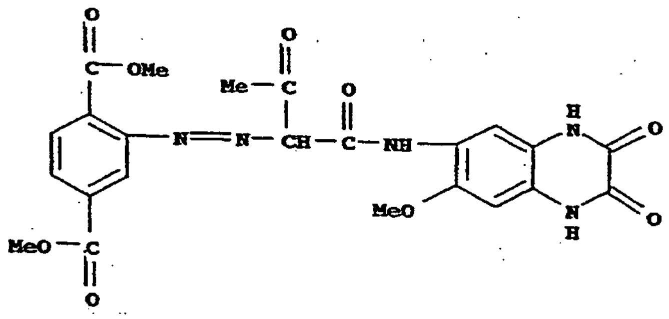

Note here that Hostaperm Yellow H5G available from Clariant Co., Ltd. is used as the C.I. Pigment Yellow 213.

For the yellow pigment, C.I. Pigment Yellow 213 may be used alone or in combination with other organic yellow pigments, organic orange pigments, organic red pigments, and so on which may be used in a proportion of 0.01% by mass to 40% by mass with respect to C.I. Pigment Yellow 213. Desirous for the other organic yellow pigments are condensed azo pigments, benzimidazolone pigments, isoindolinone pigments, condensed polycyclic pigments: for instance, C.I. Pigment Yellows 109, 110, 120, 128, 138, 139, 155, 180, 185, 214 are exemplified. The content of the organic pigments in the ink composition is 0.5% by mass to 20% by mass, and preferably 1% by mass to 12% by mass.

Referring now to the organic solvent in the oil base ink composition for ink jet recording, there are the polyalkylene glycol dialkyl ethers represented by the aforesaid general formula (1) and/or the cyclic esters represented by the aforesaid general formula (2).

The polyalkylene glycol dialkyl ethers, for instance, include diethylene glycol dimethyl ether, triethylene glycol dimethyl ether, tetraethylene glycol dimethyl ether, diethylene glycol diethyl ether, triethylene glycol diethyl ether, tetraethylene glycol diethyl ether, diethylene glycol ethyl methyl ether, triethylene glycol ethyl methyl ether, tetraethylene glycol ethyl methyl ether, diethylene glycol di-n-propyl ether, and diethylene glycol di-iso-propyl ether; however, preference is given to diethylene glycol diethyl ether, diethylene glycol dimethyl ether, diethylene glycol ethyl methyl ether, triethylene glycol dimethyl ether, and tetraethylene glycol dimethyl ether.

The cyclic esters represented by the aforesaid general formula (2), for instance, include γ-lactone having a five-membered ring structure, δ-lactone having a six-membered ring structure, and ε-lactone having a seven-membered ring structure; more specifically, γ-butyrolacone, γ-valerolactone, γ-caprolactone, γ-caprilactone, γ-laurolactone, δ-valerolactone, δ-hexalactone, δ-heptalactone, and ε-caprolacctone may be used alone or in admixture. In a preferable embodiment of the invention, the cyclic esters are γ-lactones having a five-membered ring, and in a more preferable embodiment of the invention, they are γ-butyrolacone, and γ-valerolactone. By use of the cyclic esters, the quality of prints onto the polyvinyl chloride base materials is much more improved.

The polyalkylene glycol dialkyl ethers represented by the aforesaid general formula (1), and the cyclic esters represented by the aforesaid general formula (2) should preferably have a boiling point of 150°C to 280°C under atmospheric pressure. Too high a boiling point causes the ability of the ensuing ink to be dried to go worse, giving rise to blocking of prints. Too low a boiling point, on the other hand, causes the ensuing ink to be dried too fast, only to result in printability problems such as clogging of a printer nozzle with the ink.

The polyalkylene glycol dialkyl ethers represented by the aforesaid general formula (1), and the cyclic esters represented by the aforesaid general formula (2) may be used alone; however, it is preferable to mix 1 part by mass of the polyalkylene glycol dialkyl ether with 0.02 part by mass to 4 parts by mass of the cyclic ester. The organic solvent should preferably be incorporated in the oil base ink composition in at least 50% by mass, and especially at least 70% by mass.

In addition to the organic pigment, the binder resin and dispersant may optionally be dissolved or dispersed in the inventive oil base ink composition for ink jet recording.

The binder resin here that should be soluble in the aforesaid organic solvent is added for the purpose of controlling the viscosity of the oil base ink composition and the ability of the oil base ink composition to be fixed onto the polyvinyl chloride base material. For instance, there is the mention of acrylic resins; vinyl resins such as vinyl chloride/vinyl acetate copolymer resin, polyvinyl acetate resin and butyral resin; polyester resin; polyamide resin; epoxy resin; rosin derivatives such as rosin-modified phenol resin; petroleum resin; terpene resin; styrene resin; phenol resin; cellulose resin such as cellulose acetate butylate resin; vinyl toluene-α-methylstyrene copolymer resin; styrene acrylic resin; rosin-modified resin; and so on. Preferable here is acrylic resin, vinyl chloride/vinyl acetate copolymer resin, polyester resin, and cellulose resin which may be used alone or in admixture.

The content of the binder resin is 0.5 to 3 times, and preferably 0.75 to 1.6 times, as much as the content (weight) of the pigment.

For the dispersant, use may be made of any desired one employed with oil base ink compositions in general,

and an oil base ink composition for ink jet recording in particular. Preference is given to a high-molecular dispersant comprising a polyester, polyacrylic, polyurethane or polyamine main chain and a side chain having a polar group such as an amino, carboxyl, sulfone, and hydroxyl group. It is particularly preferable to use a dispersant that works effectively when the solubility parameter of the organic solvent lies in 8 to 11.

For such dispersants, commercially available ones may be used, as exemplified by polyester high-molecular compounds such as Hinoact KF1-M, T-6000, T-7000, T-8000, T-8350P and T-8000EL (made by Takefu Fine Chemical Co., Ltd.); Solsperse 20000, 24000, 32000, 32500, 33500, 3400 and 35200 (made by The Lubrizol Corporation); Disperbyk-161, 162, 163, 164, 166, 180, 190, 191 and 192 (made by BYK); Flolene DOPA-17, 22, 33 and G-700 (made by Kyoeisha Chemical Co., Ltd.); Ajispar PB821 and PB711 (made by Ajinomoto Fine Techno Co., Ltd.); and LP4010, LP4050, LP4055, POLYMER 400, 401, 402, 403, 450, 451 and 453 (EFKA Chemicals Co., Ltd.) which may be used alone or in admixture.

The content of the dispersant is 5% by mass to 200% by mass, and preferably 30% by mass to 120% by mass, with respect to the content of the pigment, and may optionally be chosen depending on the coloring material to be dispersed.

The inventive oil base ink composition for ink jet recording may further contain stabilizers such as antioxidants and UV absorbers, surface active agents, and so on. Exemplary antioxidants are BHA (2,3-butyl-4-oxyanisole), and BHT (2,6-di-t-butyl-p-cresol) that is used in an amount of 0.01% by mass to 3.0% by mass in the oil base ink composition. For the UV absorbers, benzophenone compounds or benzotriazole compounds may be used in an amount of 0.01% by mass to 0.5% by mass in the oil base ink composition, and for the surface active agent, any of anionic, cationic, amphoteric and nonionic surfactants may be used in an amount of 0.5% by mass to 4.0% by mass in the oil base ink composition.

No particular limitation is imposed on how to prepare the inventive oil base ink composition for ink jet recording: it may be prepared by known ordinary processes. For instance, the binder resin is first dissolved in a single organic solvent selected from the polyalkylene glycol dialkyl ethers represented by General Formula (1) and the cyclic esters represented by General Formula (2) or a mixture of two or more such ethers and esters into a resin solution. Then, the pigment and dispersant are added to a part of that resin solution for mixing and dispersion in a ball mill, a bead mill, an ultrasonic mill, a jet mill or the like thereby preparing a pigment dispersion. Then, the rest of the aforesaid resin solution and other additives are added under agitation to the obtained pigment dispersion.

The obtained oil base ink composition for ink jet recording is adjusted to a viscosity of 2 mPa·s to 200 mPa·s, and preferably 3 mPa·s to 15 mPa·s at 20°C, and to a surface tension of preferably 20 mN/m to 50 mN/m. As the surface tension becomes lower than 20 mN/m, it causes the ink composition to be wetted over, or ooze out of, the surface of an ink jet printer head, rendering ink jet difficult. As the surface tension becomes higher than 50 mN/m, it causes the ink composition to be not wetted and spread over the surface of the recording medium, rendering good enough printing impossible.

The inventive oil base ink composition has a merit of being inactive to the surface of a jet nozzle treated for ink repellency; so it may advantageously be used with, for instance, an ink jet recording process of jetting ink out of an ink jet recording printer head wherein the surface of a jet nozzle is treated for ink repellency.

The recording medium to which the inventive oil base ink composition for ink jet recording is applied includes a plastic base material, and it is best suited to a hard or soft polyvinyl chloride base material. The polyvinyl chloride base material may be used in a film, sheet or other form. The inventive oil base ink composition for ink jet recording enables printing onto an untreated surface of the polyvinyl chloride base material, and has an advantage of dispensing with any expensive recording medium, unlike conventional recording media having an ink-receiving layer. Of course, however, the inventive oil base ink composition may be applied to a surface treated with an ink-receiving resin.

While the invention is now explained with reference to some examples, it is understood that they do not impose any limitation on the scope of the invention. In the following examples, viscosity was measured using "AMVn" viscometer made by Anton Parr GmBH, and the particle diameter of pigment particles was measured using "Microtrack UPA150" made by Nikkiso Co., Ltd.

(Example 1)

A resin solution having the following composition was prepared.

| | |
|---|---|
| Diethylene glycol diethyl ether: | 45.6 parts by mass |
| Tetraethylene glycol dimethyl ether: | 20.0 parts by mass |
| γ-Butyrolactone: | 25.0 parts by mass |
| Binder resin (acrylic resin Paraloid B60 available from Rohm & Haas Co., Ltd.): | 4.0 parts by mass |

A part of the obtained resin solution was added thereto with 3.6 parts by mass of C.I. Pigment Yellow 213

( Hostaperm Yellow H5G available from Clariant Co., Ltd.) and 1.8 parts by mass of dispersant ( Solsperse 32000 available from the Lubrizol Corporation), and after the solution was stirred in a dissolver for 1 hour at 3,000 rpm, it was pre-dispersed in a bead mill filled with zirconia beads (2 mm). The obtained pigment particles had an average particle diameter of 5 μm or less. Further, dispersion was implemented in a nano-mill filled with zirconia beads (0.3 mm) to obtain a pigment dispersion. The pigment particles obtained by that dispersion had an average particle diameter of 150 nm.

While the obtained pigment dispersion was stirred at 4,000 rpm, another part of the above resin solution was added to the pigment dispersion to prepare an oil base ink composition for ink jet recording according to the invention. The composition had a viscosity of 4.5 mPa·s (20°C).

(Example 2)

Example 1 was repeated except that instead of 3.6 parts by mass of C.I. Pigment Yellow 213, a mixed pigment of 3.2 parts by mass of C.I. Pigment Yellow 213 and 0.4 part by mass of C.I. Pigment Yellow 110 was used, thereby preparing an oil base ink composition for ink jet recording according to the present invention. The composition had a viscosity of 4.2 mPa·s (20°C).

(Example 3)

Example 1 was repeated except that instead of 3.6 parts by mass of C.I. Pigment Yellow 213, a mixed pigment of 3.2 parts by mass of C.I. Pigment Yellow 213 and 0.4 part by mass of C.I. Pigment Yellow 139 was used, thereby preparing an oil base ink composition for ink jet recording according to the present invention. The composition had a viscosity of 4.2 mPa·s (20°C).

(Example 4)

Example 1 was repeated except that instead of the resin solution, a resin solution having the following composition was used, thereby preparing an oil base ink composition for ink jet recording according to the present invention. The composition had a viscosity of 4.2 mPa·s (20°C).

| | |
|---|---|
| Diethylene glycol diethyl ether: | 70.6 parts by mass |
| Tetraethylene glycol dimethyl ether: | 20.0 parts by mass |
| Binder resin (acrylic resin Paraloid B60 available from Rohm & Haas Co., Ltd.): | 4.0 parts by mass |

(Example 5)

Example 1 was repeated except that instead of the resin solution, a resin solution having the following composition was used, thereby preparing an oil base ink composition for ink jet recording according to the present invention. The composition had a viscosity of 4.7 mPa·s (20°C).

| | |
|---|---|
| Tetraethylene glycol dimethyl ether: | 20.0 parts by mass |
| γ-Butyrolactone: | 70.6 parts by mass |
| Binder resin (acrylic resin Paraloid B60 available from Rohm & Haas Co., Ltd.): | 4.0 parts by mass |

(Comparative Example 1)

Example 1 was repeated except that instead of 3.6 parts by mass of C.I. Pigment Yellow 213, 3.6 parts by mass of C.I. Pigment Yellow 155 were used, thereby preparing a comparative oil base ink composition for ink jet recording. The composition had a viscosity of 4.3 mPa·s (20°C).

(Comparative Example 2)

Example 1 was repeated except that instead of 3.6 parts by mass of C.I. Pigment Yellow 213, 3.6 parts by mass of C.I. Pigment Yellow 128 were used, thereby preparing a comparative oil base ink composition for ink jet recording. The composition had a viscosity of 4.5 mPa·s (20°C).

(Comparative Example 3)

Example 1 was repeated except that instead of 3.6 parts by mass of C.I. Pigment Yellow 213, 3.6 parts by mass of C.I. Pigment Yellow 120 were used, thereby preparing a comparative oil base ink composition for ink jet recording. The composition had a viscosity of 4.1 mPa·s (20°C).

(Comparative Example 4)

Example 1 was repeated except that instead of 3.6 parts by mass of C.I. Pigment Yellow 213, 3.6 parts by mass of C.I. Pigment Yellow 185 were used, thereby preparing a comparative oil base ink composition for ink jet recording. The composition had a viscosity of 4.6 mPa·s (20°C).

(Comparative Example 5)

Example 1 was repeated except that instead of 3.6 parts by mass of C.I. Pigment Yellow 213, 3.6 parts by mass of C.I. Pigment Yellow 139 were used, thereby preparing a comparative oil base ink composition for ink jet recording. The composition had a viscosity of 4.4 mPa·s (20°C).

The oil base ink compositions for ink jet recording obtained in Examples 1-3 and Comparative Examples 1-5 were each loaded on an ink jet printer (MJ-8000C available from Seiko Epson Co., Ltd.) to make solid prints on a polyvinyl chloride film (Viewcal 900 made by Lintec Corporation) in an ink jet amount of 100% and make prints in light color in an ink jet amount of 50%, thereby preparing a weathering test piece.

(Weathering Test)

Regarding the hue (L*a*b*) and concentration (OD) of prints (test pieces), they are measured for the hue and concentration of printed colors before the test, and using a spectro-colorimeter ( X-Rite 938 made by X-Rite Co., Ltd.), and using Eye Super UV Tester SUV-W231 made by Iwasaki Electric Co., Ltd., the test pieces are subjected to a series of operations involving irradiating the test pieces with ultraviolet radiation for 20 hours, showering them with water for 10 seconds, condensing them for 4 hours, and again showering them with water for 10 seconds. With such a series of operations defined as one cycle, three such cycles were implemented to measure the hue and concentration of printed colors after each weathering test, thereby finding amounts of change in the hue (ΔE) and concentration (ΔOD) of prints before the weathering test and after each cycle from the following equations:

$$\Delta E=\sqrt{\{(L^{*0}-L^{*n})^2+(a^{*0}-a^{*n})^2+(b^{*0}-b^{*n})^2\}}$$

where $L^{*0}$ is brightness before the weathering test,
$L^{*n}$ is brightness after n cycles,
$a^{*0}$ is chromaticity before the weathering test,
$a^{*n}$ is chromaticity after n cycles,
$b^{*0}$ is chromaticity before the weathering test, and
$b^{*n}$ is chromaticity after n cycles.

$$\Delta OD=OD^{*0}-OD^{*n}$$

where $OD^{*0}$ is concentration before the weathering test, and
$OD^{*n}$ is concentration after n cycles.

As a result of Inventors study after study, it has been found that if, in the following test, the amount of hue change is less than 10 and the amount of concentration change is less than 0.3, images deteriorate less strongly even when prints are exposed to outdoor environments over an extended period of time: good enough weather resistance is achievable.

Regarding the amounts of hue change (ΔE) and concentration change (ΔOD) of prints, each test piece was evaluated on the following criteria, with results set out in Tables 1 and 2.

Evaluation 1 of solid prints in an ink jet amount of 100%

A: the amount of hue change (ΔE) is less than 10 after the cycles.
B: the amount of hue change (ΔE) is greater than 10 to less than 20 after the cycles.
C: the amount of hue change (ΔE) is greater than 20 after the cycles.

Evaluation 2 of solid prints in an ink jet amount of 100%

A: the amount of concentration change (ΔOD) is less than 0.3 after the cycles.
B: the amount of concentration change (ΔOD) is greater than 0.3 to less than 0.5 after the cycles.
C: the amount of concentration change (ΔOD) is greater than 0.5 after the cycles.

Evaluation 3 of prints in light colors in an ink jet amount of 50%

A: the amount of hue change (ΔE) is less than 10 after the cycles.
B: the amount of hue change (ΔE) is greater than 10 to less than 20 after the cycles.
C: the amount of hue change (ΔE) is greater than 20 after the cycles.

Evaluation 4 of prints in light colors in an ink jet amount of 50%

A: the amount of concentration change (ΔOD) is less than 0.3 after the cycles.
B: the amount of concentration change (ΔOD) is greater than 0.3 to less than 0.5 after the cycles.
C: the amount of concentration change (ΔOD) is greater than 0.5 after the cycles.

Table 1

| | n | Evaluation 1 | Evaluation 2 | Evaluation 3 | Evaluation 4 |
|---|---|---|---|---|---|
| Ex. 1 | 1 | A | A | A | A |
| Ex. 1 | 2 | A | A | A | A |
| Ex. 1 | 3 | A | A | A | A |
| Ex. 2 | 1 | A | A | A | A |
| Ex. 2 | 2 | A | A | A | A |
| Ex. 2 | 3 | A | A | A | A |
| Ex. 3 | 1 | A | A | A | A |
| Ex. 3 | 2 | A | A | A | A |
| Ex. 3 | 3 | B | B | B | B |
| Ex. 4 | 1 | A | A | A | A |
| Ex. 4 | 2 | A | A | A | A |
| Ex. 4 | 3 | A | A | A | A |
| Ex. 5 | 1 | A | A | A | A |
| Ex. 5 | 2 | A | A | A | A |
| Ex. 5 | 3 | A | A | A | A |

Table 2

| | n | Evaluation 1 | Evaluation 2 | Evaluation 3 | Evaluation 4 |
|---|---|---|---|---|---|
| Comp. Ex. 1 | 1 | A | A | B | B |
| Comp. Ex. 1 | 2 | C | B | C | C |
| Comp. Ex. 1 | 3 | C | C | C | C |
| Comp. Ex. 2 | 1 | A | A | B | A |

(continued)

| | n | Evaluation 1 | Evaluation 2 | Evaluation 3 | Evaluation 4 |
|---|---|---|---|---|---|
| Comp. Ex. 2 | 2 | B | B | C | B |
| Comp. Ex. 2 | 3 | C | C | C | C |
| Comp. Ex. 3 | 1 | A | A | A | A |
| Comp. Ex. 3 | 2 | B | A | B | B |
| Comp. Ex. 3 | 3 | B | B | C | C |
| Comp. Ex. 4 | 1 | A | A | B | B |
| Comp. Ex. 4 | 2 | A | A | C | C |
| Comp. Ex. 4 | 3 | A | B | C | C |
| Comp. Ex. 5 | 1 | A | B | B | B |
| Comp. Ex. 5 | 2 | B | C | C | C |
| Comp. Ex. 5 | 3 | C | C | C | C |

From the above results of evaluation, it is found that the inventive oil base ink composition for ink jet recording is less likely to deteriorate irrespective of how much ink is jetted and even upon repeated cycles, and enables the hue and concentration of prints to be held.
It is thus found that even when prints are exposed to ultraviolet and wind and rain in an open area, they are less likely to deteriorate

APPLICABILITY TO THE INNDUSTRY

The present invention provides an the present invention is to provide an oil base ink composition for ink jet recording which has a low vapor pressure, smells less strongly, is highly safe for the human body, makes sure of good working environments, maintains print quality over extended periods of time without recourse to using an inorganic yellow pigment or a metal complex yellow pigment as the yellow pigment, and provides prints improved in terms of weather resistance.

## Claims

1. An oil base ink composition for ink jet recording, **characterized in that** a binder resin, a dispersant and at least C.I. Pigment Yellow 213 as an organic pigment are contained in an organic solvent comprising a polyalkylene glycol dialkyl ether represented by the following general formula (1) and/or a cyclic ester represented by the following general formula (2):

   $R^1$- $(OC_2H_4)_n$-$OR^2$ General Formula (1)

   where $R^1$ and $R^2$ are each an alkyl group having 1 to 3 carbon atoms and may be identical or different, and n is an integer of 2, 3 and 4; and

   General Formula (2)

   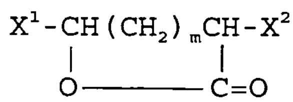

   where $X^1$ and $X^2$ are each independently a hydrogen atom, and an alkyl or alkenyl group having 1 to 5 carbon atoms , and m is an integer of 1, 2 and 3.

2. The oil base ink composition for ink jet recording according to claim 1, **characterized in that** the organic solvent

has a boiling point of 150 to 280°C under atmospheric pressure.

3. The oil base ink composition for ink jet recording according to claim 1, **characterized by** containing as the organic pigment C.I. Pigment Yellow 213 plus an organic pigment selected from the group consisting of a condensed azo pigment, a benzimidazolone pigment, an isoindolinone pigment and a condensed polycyclic pigment, with a content of that organic pigment being 0.01 to 40% by mass with respect to the C.I. Pigment Yellow 213.

4. The oil base ink composition for ink jet recording according to any one of claims 1 to 3, **characterized in that** a content of the organic pigment is 0.5% by mass to 20% by mass in the oil base ink composition for ink jet recording.

5. The oil base ink composition for ink jet recording according to claim 1, **characterized in that** the binder resin is at least one of an acrylic resin, a vinyl chloride/vinyl acetate copolymer resin, a polyester resin and a cellulose resin.

6. The oil base ink composition for ink jet recording according to claim 1, **characterized by** having a viscosity of 3 mPa·s to 15 mPa·s at 20°C.

7. The oil base ink composition for ink jet recording according to claim 1, **characterized by** having a flash point of 60°C or higher.

**INTERNATIONAL SEARCH REPORT**

International application No.
PCT/JP2008/061065

A. CLASSIFICATION OF SUBJECT MATTER
*C09D11/00*(2006.01)i, *B41J2/01*(2006.01)i, *B41M5/00*(2006.01)i

According to International Patent Classification (IPC) or to both national classification and IPC

B. FIELDS SEARCHED

Minimum documentation searched (classification system followed by classification symbols)
C09D11/00, B41J2/01, B41M5/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)
CAplus(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| Y | JP 2005-330298 A (Hitachi Maxell, Ltd.), 02 December, 2005 (02.12.05), Claims 1, 3 to 4, 7 to 8, 12 to 13; Par. Nos. [0013], [0025], [0034], [0048]; examples & JP 3692365 B1 | 1-7 |
| Y | JP 2005-330460 A (Hitachi Maxell, Ltd.), 02 December, 2005 (02.12.05), Claim 1; Par. Nos. [0013], [0025], [0034], [0048]; examples (Family: none) | 1-7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>31 July, 2008 (31.07.08) | Date of mailing of the international search report<br>12 August, 2008 (12.08.08) |
| Name and mailing address of the ISA/<br>Japanese Patent Office<br>Facsimile No. | Authorized officer<br><br>Telephone No. |

Form PCT/ISA/210 (second sheet) (April 2007)

**INTERNATIONAL SEARCH REPORT**

International application No.
PCT/JP2008/061065

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2006-056990 A (Dai Nippon Toryo Co., Ltd.), 02 March, 2006 (02.03.06), Claims 1 to 3; Par. Nos. [0008] to [0009]; examples & EP 1783179 A1 & WO 2006/018922 A1 & CA 2577264 A & KR 10-2007-0037497 A & CN 101006145 A | 1-7 |
| A | JP 11-100519 A (Clariant GmbH), 13 April, 1999 (13.04.99), Claims 3, 9 & US 5910577 A & EP 894831 A1 & DE 19733307 A & DE 59805884 D & CZ 9802404 A & BR 9803720 A & DK 894831 T & ES 2182194 T & CA 2244393 A & CN 1208058 A & CA 2244393 A1 | 1-7 |
| A | JP 2006-117931 A (Hewlett-Packard Development Co., L.P.), 11 May, 2006 (11.05.06), Claims 5 to 6 & US 2006/0075925 A1 & EP 1645604 A2 | 1-7 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001302708 A
- JP 2002097396 A
- JP 2003096358 A
- JP 2003292860 A
- JP 2006160785 A
- WO 2004007626 A
- WO 2006119847 A